**Europäisches Patentamt**

**European Patent Office**

**Office européen des brevets**

(19)

(11) Veröffentlichungsnummer : **0 451 446 B1**

(12) **EUROPÄISCHE PATENTSCHRIFT**

(45) Veröffentlichungstag der Patentschrift :
**01.06.94 Patentblatt 94/22**

(51) Int. Cl.⁵ : $G01C\ 9/00$

(21) Anmeldenummer : **91101185.6**

(22) Anmeldetag : **30.01.91**

(54) **Einrichtung zur Bergfahrt-Erkennung.**

(30) Priorität : **29.03.90 DE 4010073**

(43) Veröffentlichungstag der Anmeldung :
**16.10.91 Patentblatt 91/42**

(45) Bekanntmachung des Hinweises auf die
Patenterteilung :
**01.06.94 Patentblatt 94/22**

(84) Benannte Vertragsstaaten :
**AT DE FR GB IT NL SE**

(56) Entgegenhaltungen :
**WO-A-86/00129**
**DE-A- 3 334 719**
**PATENT ABSTRACTS OF JAPAN, Band 009,**
**Nr. 194 (M-403), 10. August 1985; & JP-A-60 060**
**047**

(73) Patentinhaber : **WABCO**
**Vermögensverwaltungs-GmbH**
**Postfach,**
**Am Lindener Hafen 21**
**D-30432 Hannover (DE)**

(72) Erfinder : **Koschorek, Ralf**
**Am Ihmeufer 3**
**W-3000 Hannover 91 (DE)**
Erfinder : **Rosendahl, Hartmut**
**Elisenstrasse 33**
**W-3000 Hannover 91 (DE)**
Erfinder : **Krüger, Gerd**
**Stöckener Strasse 47**
**W-3016 Seelze 2 (DE)**
Erfinder : **Rothen, Johann**
**Otto-Lilienthal-Strasse 7**
**W-3203 Sarstedt (DE)**

(74) Vertreter : **Schrödter, Manfred, Dipl.-Ing.**
**WABCO Vermögensverwaltungs-GmbH**
**Postfach 91 12 80**
**D-30432 Hannover (DE)**

## Beschreibung

Die Erfindung betrifft eine Einrichtung zur Bergfahrt-Erkennung gemäß dem Oberbegriff des Patentanspruchs 1.

Eine solche Einrichtung (Steigungsermittlung) für Fahrzeuge ist aus der DE-A-33 347 19 bekannt. Hier ist ein besonderer Neigungssensor nicht erforderlich. Es sind jedoch verschiedene motor- und fahrzeugspezifische Daten notwendig, z. B. ein Motorkennlinienfeld, welche nur für wenige Anwendungsfälle zur Verfügung stehen.

Eine momentane Bewertung, ob sich ein Fahrzeug, insbesondere ein Nutzfahrzeug (Lkw oder Bus) gerade auf einer Steigung oder auf einem Gefälle befindet, ist wichtig als Kriterium für verschiedene elektronische Untersysteme im Fahrzeug, beispielsweise für eine Deichselkraftregelung. Bei dieser werden die Bremsen im Zugfahrzeug und im Hänger so geregelt, daß die Deichselkraft einen bestimmten Wert nicht überschreitet. Hierdurch wird ein Aufschieben des Hängers verhindert.

Das genannte System kann damit ohne wesentliche Mehrkosten verbessert werden bzw. es können Fehlfunktionen verhindert werden.

Aufgabe der Erfindung ist es, eine Anordnung anzugeben, welche eine Bergfahrt oder eine Talfahrt zuverlässig und mit einfachen Mitteln erkennt.

Diese Aufgabe wird durch die im Patentanspruch 1 enthaltene Erfindung gelöst. Die abhängigen Ansprüche enthalten zweckmäßige Weiterbildungen der Erfindung.

Die erfindungsgemäße Einrichtung benutzt den bisher zu diesem Zweck nicht ausgewerteten Effekt der Achslastverlagerung beim Befahren einer Steigung oder eines Gefälles gegenüber der Fahrt in einer Ebene. So erhöht sich die Achslast der Hinterachse beim Befahren einer Steigung, während sich die Achslast beim Befahren eines Gefälles verringert. Dieser Effekt ist im wesentlichen abhängig von der Höhe des Schwerpunktes und der Beladung des Fahrzeugs.

Da bekanntlich auch eine Fahrzeugbeschleunigung oder -verzögerung zu den gleichen Effekten einer Achslastverlagerung führt, ist es zweckmäßig, gleichzeitig eine Erfassung der Fahrzeugbeschleunigung durchzuführen, und deren Höhe entweder bei der Bergfahrterkennung zu berücksichtigen oder die Achslastverlagerung nur während einer unbeschleunigten Fahrt auszuwerten.

Gemäß einer Weiterbildung der Erfindung ist es auch möglich, die Straßensteigung direkt zu berechnen.

Die Erfindung wird im folgenden anhand einer Zeichnung näher erläutert. Diese zeigt in schematischer Darstellung in

Figur 1 ein Fahrzeug beim Befahren einer Steigung, in
Figur 2 ein Blockschaltbild der Elektronik, und in
Figur 3 einen Lastzug in einem Gefälle.

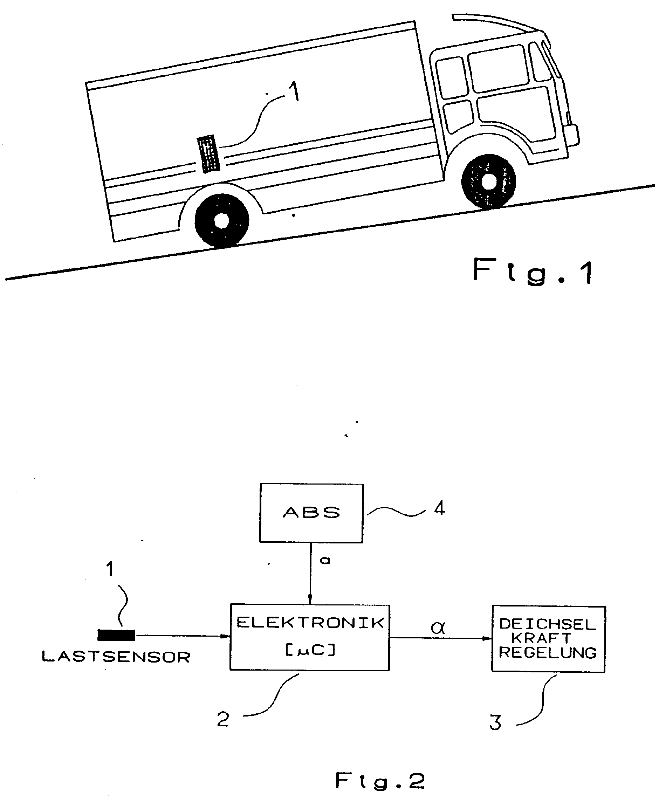

In Figur 1 ist schematisch ein Fahrzeug beim Befahren einer Steigung dargestellt. Wie man erkennt, wird hierdurch die Hinterachse stärker belastet, während die Vorderachse entlastet wird (übertrieben dargestellt). Die stärkere Belastung bzw. Einfederung der Hinterachse wird durch einen Lastsensor (1) sensiert. Der Lastsensor ist an geeigneter Stelle, beispielsweise an den Belastungspunkten der Federung, angebracht. Er kann auch die Durchbiegung der Hinterachse sensieren. Falls das Fahrzeug luftgefedert ist, kann auch der Druck in den Federbälgen ausgewertet werden. Anstatt einen Kraftsensor bzw. Lastsensor zu verwenden, kann man auch die Einfederung des Fahrzeugs mittels eines Wegsensors auswerten.

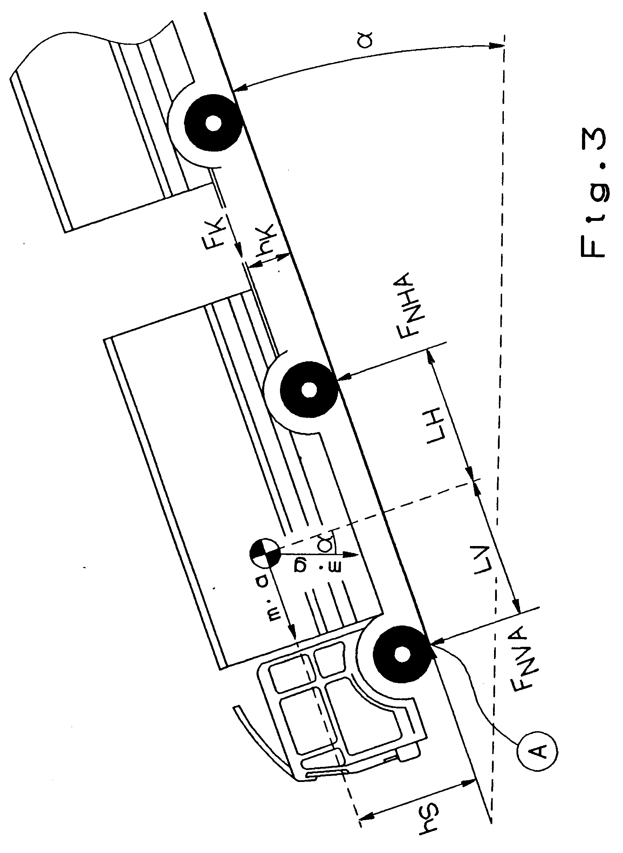

Gemäß der Figur 2 wird der Ausgangswert des Lastsensors (1) einer Elektronik (Mikrocomputer) (2) zugeleitet. Außerdem wird noch der Wert der Fahrzeugbeschleunigung bzw. -verzögerung (a) von einer Einrichtung (4) zur Verfügung gestellt. Dieser Wert kann z. B. aus einem Antiblockiersystem (ABS) entnommen werden, wo dieser im allgemeinen vorliegt. Das Antiblockiersystem bestimmt die Fahrzeugbeschleunigung durch Auswertung der Radgeschwindigkeiten und somit unabhängig von der befahrenen Steigung.

Das Antiblockiersystem enthält ebenfalls mindestens einen Mikrocomputer. Seine Funktionsweise ist dem Fachmann bekannt (DE-A-28 44 279).

Der Mikrocomputer in der Elektronik (2) ist so programmiert, daß er die weiter unten aufgeführten Formeln auswerten kann. Als Typ kann beispielsweise der TMS 7742 der Firma Texas Instruments verwendet werden.

Die Elektronik (2) bestimmt aus den zugeleiteten Daten, ob eine Berg- oder Talfahrt vorliegt.

Auf Bergfahrt wird beispielsweise dann erkannt, wenn gilt:

$$|F_{NHA} - F_{NHAE}| > \triangle F_{NHA} \text{ und } |a_F| < |a_{Fmin}|, \text{ wobei } a_{Fmin} \approx 0$$

In dieser Formel bedeuten:

$F_{NHAE}$ = Wert der Hinterachslast in der Ebene

$F_{NHA}$ = aktueller Wert der Hinterachslast

$\triangle F_{NHA}$ = Differenz zwischen dem aktuellen Wert der Hinterachslast und der Hinterachslast in der Ebene, ab der auf Bergfahrt erkannt werden soll

2

$a_F$ = Fahrzeugbeschleunigung relativ zur Fahrbahn

$a_{Fmin}$ = Schwellenwert der Fahrzeugverzögerung, unterhalb welchem $a_F = 0$ angenommen wird.

Die Elektronik (2) gibt die Entscheidung, ob Berg- oder Talfahrt vorliegt oder auch direkt den Wert der Straßensteigung $\alpha$, an eine weitere Elektronik, beispielsweise eine Deichselkraftregelung (3) zur weiteren Verwendung ab.

Die Hinterachslast $F_{NHAE}$ wird zweckmäßig so ermittelt, daß in bestimmten Zeit- oder Wegabständen der vom Hinterachs-Lastsensor erfaßte aktuelle Wert $F_{NHA}$ gespeichert und alle erfaßten Werte durch ein geeignetes, bekanntes Verfahren softwaremäßig gemittelt werden. Ein solches Verfahren ist aber nicht Gegenstand dieser Erfindung.

Da die Hinterachslast infolge der Fahrbahnunebenheiten schwankt, empfiehlt sich eine Filterung des Ausgangssignales des Hinterachs-Lastsensors (4).

Die Erfassung der Hinterachslast in der Ebene $F_{NHAE}$ kann auch durch Abspeichern des momentanen Wertes bei Fahrt in der Ebene durch eine Schalterbetätigung durch den Fahrer erfolgen.

In Weiterbildung der Erfindung kann auch der genaue Steigungswinkel $\alpha$ der befahrenen Straße mit Hilfe von näherungsweise bereits bekannten Daten wie z. B. Radstand, Schwerpunktlage, Fahrzeugmasse u. a. ermittelt werden.

In der Figur 3 ist schematisch ein bergab fahrender Lastzug sowie die auf diesen einwirkenden Kräfte dargestellt.

Es bedeuten:

$\alpha$ = Straßensteigung

m = Fahrzeugmasse

h = Fahrzeugverzögerung

g = Erdbeschleunigung

$h_s$ = Fahrzeugschwerpunkthöhe

$I_v$ = Abstand des Fahrzeugschwerpunktes von der Vorderachse

$I_h$ = Abstand des Fahrzeugschwerpunktes von der Hinterachse

$F_K$ = Kuppelkraft (Deichselkraft)

$h_K$ = Höhe der Anhängerkupplung

$F_{NHA}$ = Hinterachslast

Die Kräfte $F_{NHA}$ und $F_K$ sind in Newton [$kgm/s^2$] anzugeben.

Bildet man nun die Summe der Momente um den Punkt A, so ergibt sich

$$\Sigma M^A = 0 = m.a.h_s - m.g.\cos\alpha.l_v + m.g.\sin\alpha.h_s + f_K.h_K + + F_{NHA}(l_v + l_H)$$

Für kleine Winkel gilt:

$$\cos\alpha \approx 1 \text{ und } \sin\alpha \approx \alpha$$

Daraus folgt:

$$O = m.a.h_s - m.g.l_v + m.g.\alpha.h_s + F_K.h_K + F_{NHA}(l_v + l_H)$$

Hieraus folgt für die Straßensteigung $\alpha$

$$\alpha = \frac{m.g.l_v - m.a.h_s - F_{NHA}(l_v + l_H) - F_K.h_K}{m.g.h_s}$$

Nicht direkt erfaßbare Parameter, die in der Gleichung für die Straßensteigung $\alpha$ vorhanden sind, wie z. B. die Höhe des Fahrzeugschwerpunktes $h_s$ sowie die übrigen Abmessungen, können der Elektronik (2) als Schätzwerte eingegeben werden. Die Fahrzeugmasse m kann über den vorhandenen Lastsensor (1) näherungsweise ermittelt werden. Wird die Deichselkraft $F_K$ sensiert, so ist auch diese bekannt, könnte aber sonst auch mit einem konstanten Wert angenommen oder eventuell auch vernachlässigt werden. Die hiermit bestimmte Straßensteigung $\alpha$ ist für die meisten Anwendungsfälle ausreichend genau.

## Patentansprüche

1. Einrichtung zur Bergfahrt-Erkennung, insbesondere für Nutzfahrzeuge mit mindestens zwei Achsen, mit einer Einrichtung zur Messung der Fahrzeugbeschleunigung (4),
gekennzeichnet durch folgende Merkmale:
   a) es ist ein Sensor (1) für die Achslast der Hinterachse und/oder der Vorderachse vorgesehen;
   b) es ist eine Elektronik (2) vorgesehen, welcher die Signale des Sensors (1) und der Einrichtung zur Messung der Fahrzeugbeschleunigung (4) zugeleitet werden, und welche hieraus die durch eine Berg- oder Talfahrt verursachte Achslastverlagerung erkennt ;
   c) die Elektronik (2) ist derart ausgebildet, daß sie im Betrieb den aktuellen Wert des Sensorausgangssignals mit einem Wert vergleicht, der die Achslast bei Fahrt in der Ebene repräsentiert;

d) die Elektronik (2) ist derart ausgebildet, daß sie im Betrieb entweder die durch die Fahrzeugbeschleunigung bzw. -verzögerung relativ zur Fahrbahn verursachte Veränderung der Achslast berücksichtigt oder eine Auswertung der Achslastverlagerung nur während einer unbeschleunigten Fahrt zuläßt.

2. Einrichtung nach Anspruch 1, <u>dadurch gekennzeichnet,</u> daß der Vergleich erfolgt nach der Formel

$$|F_{NHA} - F_{NHAE}| > \Delta F_{NHA} \text{ und } |a_F| < |a_{Fmin}|, \text{ wobei } a_{Fmin} \approx 0$$

worin bedeuten:

$F_{NHAE}$ = Wert der Hinterachslast in der Ebene

$F_{NHA}$ = aktueller Wert der Hinterachslast

$\Delta F_{NHA}$ = Differenz zwischen dem aktuellen Wert der Hinterachslast und der Hinterachslast in der Ebene, ab der auf Bergfahrt erkannt werden soll

$a_F$ = Fahrzeugbeschleunigung relativ zur Fahrbahn

$a_{Fmin}$ = Schwellenwert der Fahrzeugverzögerung, unterhalb welchen $a_F = 0$ angenommen wird.

3. Einrichtung nach einem oder mehreren der Ansprüche 1 bis 2, <u>dadurch gekennzeichnet,</u> daß aus der Differenz der Achslasten in Ebene und Steigung unter Berücksichtigung der Fahrzeugbeschleunigung und weiterer Daten wie Fahrzeugmasse, Schwerpunktlage, Deichselkraft, Kupplungshöhe und Radstand die Straßensteigung berechnet wird nach der Formel

$$\alpha = \frac{m.g.l_v - m.a.h_s - F_{NHA}(l_v + l_H) - F_K.h_K}{m.g.h_s}$$

worin bedeuten:

$\alpha$ = Straßensteigung

$m$ = Fahrzeugmasse

$g$ = Erdbeschleunigung

$l_v$ = Abstand des Fahrzeugschwerpunktes von der Vorderachse

$a$ = Fahrzeugverzögerung

$h_s$ = Höhe des Fahrzeugschwerpunktes

$F_{NHA}$ = Hinterachslast

$l_h$ = Abstand des Fahrzeugschwerpunktes von der Hinterachse

$F_K$ = Deichselkraft

$h_K$ = Höhe der Anhängerkupplung

4. Einrichtung nach Anspruch 1 bis 3, <u>dadurch gekennzeichnet,</u> daß als Sensor (1) ein Wegsensor dient, wobei die Achslast ($F_{NVA}$ oder $F_{NHA}$) aus der Einfederung mindestens einer Achse bestimmt wird.

5. Einrichtung nach Anspruch 1 bis 4, <u>dadurch gekennzeichnet,</u> daß die gemessenen Last- bzw. Weggrößen gefiltert und/oder gemittelt werden.

## Claims

1. Device for detecting uphill travel, especially for utility vehicles with at least two axles, with a device for measuring the vehicle acceleration (4),
   <u>characterised by the following features:</u>
   a) a sensor (1) is provided for the axle load of the rear axle and/or the front axle;
   b) an electronic system (2) is provided to which the signals of the sensor (1) and of the device for measuring the vehicle acceleration (4) are fed, and which detects therefrom the axle load shift caused by travelling uphill or downhill;
   c) the electronic system (2) is so constructed that in operation it compares the actual value of the sensor output signal with a value which represents the axle load when travelling on the level;
   d) the electronic system (2) is so constructed that in operation it either takes into account the alteration in the axle load caused by the vehicle acceleration or deceleration relative to the road, or permits evaluation of the axle load shift only during unaccelerated travel.

2. Device according to Claim 1, <u>characterised in that</u> the comparison is made according to the formula

$$|F_{NHA} - F_{NHAE}| > \Delta F_{NHA} \text{ and } |a_F| < |a_{Fmin}|, \text{ where } a_{Fmin} \approx 0$$

wherein:

$F_{NHAE}$ = value of the rear axle load on the level

$F_{NHA}$ = actual value of the rear axle load

$\Delta F_{NHA}$ = difference between the actual value of the rear axle load and the rear axle load on the level, starting from which uphill travel is to be detected

$a_F$ = vehicle acceleration relative to the road

$a_{Fmin}$ = threshold value of the vehicle deceleration, below which $a_F = 0$ is assumed.

3. Device according to one or more of Claims 1 to 2, <u>characterised in that</u> from the difference between the axle loads on the level and on an incline, taking into account the vehicle acceleration and further data such as vehicle mass, centre of gravity, load on drawbar, coupling height and wheel base, the inclination of the road is calculated according to the formula

$$\alpha = \frac{m.g.l_v - m.a.h_s - F_{NHA}(l_v + l_H) - F_K.h_K}{m.g.h_s}$$

wherein:

$\alpha$ = inclination of road

m = vehicle mass

g = acceleration due to gravity

$l_v$ = distance between the centre of gravity of the vehicle and the front axle

a = vehicle deceleration

$h_s$ = height of the centre of gravity of the vehicle

$F_{NHA}$ = rear axle load

$l_b$ = distance between the centre of gravity of the vehicle and the rear axle

$F_K$ = load on drawbar

$h_K$ = height of the trailer coupling

4. Device according to Claim 1 to 3, <u>characterised in that</u> a displacement sensor serves as the sensor (1), the axle load ($F_{NVA}$ or $F_{NHA}$) being determined from the spring deflection of at least one axle.

5. Device according to Claim 1 to 4, <u>characterised in that</u> the measured load or displacement magnitudes are filtered and/or averaged.

## Revendications

1. Dispositif pour détecter la conduite sur une pente, en particulier pour véhicules utilitaires comportant au moins deux essieux, avec un dispositif pour mesurer l'accélération du véhicule (4),
   <u>caractérisé en ce que:</u>
   a) un capteur (1) est prévu pour détecter la charge de l'essieu arrière et/ou de l'essieu avant;
   b) une électronique (2) est prévue, à laquelle sont envoyés les signaux du capteur (1) et du dispositif pour mesurer l'accélération du véhicule (4) et qui détecte, à partir de ces signaux, le déplacement des charges par essieu provoqué par une montée ou une descente;
   c) l'électronique (2) est conçue de manière que, pendant le fonctionnement, elle compare la valeur actuelle du signal de sortie du capteur avec une valeur représentant la charge par essieu pendant la conduite sur le plat; et
   d) l'électronique (2) est conçue de manière que, pendant le fonctionnement, soit elle tienne compte du changement de la charge par essieu provoqué par l'accélération ou la décélération du véhicule par rapport à la chaussée, soit elle autorise seulement une exploitation du déplacement des charges par essieu pendant une conduite sans accélération.

2. Dispositif selon la revendication 1, caractérisé en ce que la comparaison s'effectue selon la formule
   $$|F_{NHA} - F_{NHAE}| > \Delta F_{NHA} \text{ et } |a_F| < |a_{Fmin}|, \text{ où } a_{Fmin} \approx 0$$
   dans laquelle:

   $F_{NHAE}$ = valeur de la charge de l'essieu arrière sur le plat

   $F_{NHA}$ = valeur actuelle de la charge de l'essieu arrière.

   $\Delta F_{NHA}$ = différence entre la valeur actuelle et la valeur sur le plat de la charge de l'essieu arrière à partir de laquelle doit être détecté que le véhicule est sur une pente

   $a_F$ = accélération du véhicule par rapport à la chaussée

$a_{Fmin}$ = seuil de décélération du véhicule au-dessous duquel il est considéré que $a_F = 0$.

3. Dispositif selon la revendication 1 ou 2, caractérisé en ce que l'inclinaison de la route est calculée, à partir de la différence des charges par essieu sur le plat et en pente, en tenant compte de l'accélération du véhicule et d'autres données, telles que le poids du véhicule, l'emplacement du centre de gravité, l'effort au timon, la hauteur de l'attelage et l'empattement, selon la formule

$$\alpha = \frac{m.g.l_v - m.a.h_s - F_{NHA}(l_v + l_H) - F_K.h_K}{m.g.h_s}$$

dans laquelle:

$\alpha$ = inclinaison de la route
$m$ = poids du véhicule
$g$ = accélération de la pesanteur
$l_v$ = distance entre le centre de gravité du véhicule et l'essieu avant
$a$ = décélération du véhicule
$h_s$ = hauteur du centre de gravité du véhicule
$F_{NHA}$ = charge de l'essieu arrière
$l_h$ = distance entre le centre de gravité du véhicule et l'essieu arrière
$F_K$ = effort au timon
$h_K$ = hauteur de l'attelage de la remorque

4. Dispositif selon les revendications 1 à 3, caractérisé en ce que le capteur (1) est un capteur de déplacement et la charge par essieu ($F_{NVA}$ ou $F_{NHA}$) est déterminée d'après la compression de la suspension au droit d'au moins un essieu.

5. Dispositif selon les revendications 1 à 4, caractérisé en ce que les grandeurs mesurées de la charge et du déplacement sont filtrées et/ou utilisées sous forme de moyennes.

Fig.1

Fig.2

Fig.3

EP 0 451 446 B1